# EUROPEAN PATENT APPLICATION

(11) **EP 2 380 471 A1**
(43) Date of publication of application: **26.10.2011**
(21) Application number: 09838057.9
(22) Date of filing: 31.08.2009
(51) Int. Cl.: A47J 31/40, A47J 31/36

(54) **COFFEE MACHINE USING CAPSULES**

(30) Priority: 30.12.2008 CN 200820303849 U
(71) Applicant: Cixi Tcofi Electric Co., LTD, Puyan Village, Xinpu Town Cixi City (CN)
(72) Inventor: Cixi Tcofi Electric Co., LTD, Puyan Village, Xinpu Town Cixi City (CN)
(74) Representative: Orr, Robert
(86) International application number: PCT/CN2009/000988
(87) International publication number: WO 2010/081270

(57) **Abstract**

A coffee machine using capsules, involves a frame, a capsule seat (3), a pressing and extracting mechanism, and a driving mechanism. A guide groove (12) at the vertical direction is set on either side of the capsule seat respectively. The guide grooves match the flange on the left side of the capsule. A rotary lamina (13) is set on the edge of the left lower side of every guide groove. The free ends of rotary laminas are toward the inside correspondingly. Springs (14) are set on the shafts of the rotary laminas. In an original state, the space between the free ends of two rotary laminas is smaller than the diameter of the flange of the capsule, and is greater than or equal to the diameter of the body of the capsule. The pressing and extracting mechanism set at the right side of the capsule seat has a cavity with an open side. Blades (8) are set on the bottom of the cavity. Water injection holes (9) are set on the cavity.

## Description

### Field of the invention

The invention relates to a coffee machine, in particular to a capsule type coffee machine.

### Background of the invention

The capsule type coffee machine is a novel coffee machine appeared in recent years, and is especially used for households and offices. The capsule type coffee machine has the major characteristic that it can neither grind beans nor use coffee powder for making coffee, and only can use special coffee capsules. Compared with the semiautomatic coffee machine and the full-automatic coffee machine, the capsule type coffee machine is greatly simplified in operation, and only with one button can finish the operation. In addition, for its unique working mode, the capsule type coffee machine omits the components such as the component for grinding beans, etc. that the full-automatic coffee machine has, and therefore it has light volume and lower cost. The conventional coffee type coffee machine generally includes a coffee extracting mechanism which can realize extraction of coffee through injection of high pressure water having certain heat, and further includes an upper fixed seat and a brewing cavity; the upper fixed seat is provided with an inlet for inletting of high pressure water, the bottom edge of the upper fixed seat is provided with a ring-shaped groove, the upper part of a ring-shaped sealing ring is embedded in the ring-shaped groove of the upper fixed seat so that the sealing ring can be fixed in the upper fixed seat; a coffee brewing cavity with an opening facing upwards is arranged in a cavity of the coffee-making machine; and the coffee brewing cavity is used for placement of a coffee capsule, when extraction is to be performed, the coffee capsule is arranged in the coffee brewing cavity, and the upper fixed seat is covered on the coffee brewing cavity and realizes sealing with the upper end of the coffee capsule arranged in the coffee brewing cavity through the sealing ring. The coffee machine squeezes capsules mainly utilizing manual force, and the force required is larger, thereby wasting force and difficultly extracting coffee in the capsule completely. When the capsule is used out ,the waste capsule is manually taken out and thrown away, and this action is repeated after every boiling, which is troublesome and inconvenient, and if the waste capsule is forgotten to be taken out and has been stored in the brewing cavity, deterioration and mould phenomena will happen, and the machine is difficult to clean, and is dirty and insanitary and has bad smells to influence the health of a human body when making coffee next time, so that people is seeking improvement continuously. The utility model of the patent No. CN200820101340.3 discloses an improvement of an extracting mechanism of a sealing structure of pressure type coffee machine, including a ring-shaped body which is made of elastic materials and embedded at the bottom end of an upper fixed seat of the coffee extracting mechanism, and the center of the ring-shaped body is provided with a central through hole; and the ring-shaped body is provided with a hollow internal cavity and a ring-shaped opening which is communicated correspondingly with the hollow internal cavity along the ring shape, and the ring-shaped opening faces the central axis of the central through hole. With the structure, the coffee extracting mechanism can effectively reduce the pressing force between a sealing part and a coffee brewing cavity group (namely the coffee brewing cavity for placement of a coffee pod or a coffee capsule or a coffee filter screen) and the opening force and simultaneously can make good sealing during extraction of coffee liquid, so that the coffee extracting mechanism can normally extract coffee without water leakage. Although this design scheme can reduce the manual force, a simple, convenient and sanitary method without using manual force has still not been found.

### Summary of the invention

The invention aims at solving the technical problems that the prior art needs larger manual force, the extraction is not incomplete, and the like, and provides a conveniently-operated, completely-extracting, safe and sanitary capsule coffee machine.

The technical problems of the invention are solved mainly through the following technical scheme: a novel capsule type coffee machine comprises a frame, a capsule seat, a capsule pressing and extracting mechanism, and a driving mechanism. The novel capsule type coffee machine is characterized in that a guide groove at the vertical direction is set on either side of the capsule seat respectively. The guide grooves match the flange on the left side of the capsule. A rotary lamina is set on the edge of the left lower side of every guide groove. The free ends of rotary laminas are toward the inside correspondingly. Torsion return springs are set on the shafts of the rotary laminas. In an original state, the space between the free ends of two rotary laminas is smaller than the diameter of the flange of the capsule body, and is greater than or equal to the diameter of the body of the capsule. The pressing and extracting mechanism set at the right side of the capsule seat has a cavity with an open side. Blades are set on the bottom of the cavity. Water injection holes are set on the cavity. The device is applicable to a coffee capsule which is provided with a flange at the left side and a main body at the right side. During use, the coffee capsule is set on the capsule seat, and the flange of the coffee capsule on the left side is arranged in the guide groove and slides down along the guide groove till the flange of the capsule is arranged between the right flange of the guide groove and the rotary lamina at the left side and stays on a same axis with the coffee pressing and extracting mechanism. The driving mechanism drives the cavity to move, the cavity wraps the capsule inside, the blades at the bottom part of the cavity prick the capsule, the cavity drives the capsule to move, and the flange pushes away the rotary lamina to rotate when the capsule is in motion; when the flange penetrates through the rotary lamina, the rotary lamina returns to the initial position under the return force of the spring, at the time the capsule is pressed by needles at the left side of the capsule, these needles prick the capsule, a water injection system injects high pressure hot water into the cavity, and hot water enters into the capsule through the holes pricked at the right side of the capsule to perform extraction, and squeezes out liquid with coffee dissolved from the holes pricked at the left side of the capsule to finish the extraction. When the pressing and extracting mechanism returns, the capsule can not return as the flange is resisted by the rotary laminas, so that the capsule is separated from the pressing and extracting mechanism. Preferably, the driving mechanism is a hydraulic system including a hydraulic oil cylinder and a hydraulic oil control device. A movable part of the hydraulic oil cylinder is connected with the cavity with an open side. As the driving mechanism, the hydraulic system has the characteristics of convenient control, stable stressing, and no need of manual force to provide power.

Preferably, a guide column is arranged between two sides of the movable part of the hydraulic cylinder and the frame respectively, and a return spring respectively connected with two sides of the movable part of the cylinder and the frame is arranged. After the work is finished, the hydraulic cylinder relieves pressure, and the return springs push the pressing and extracting mechanism to the original position for next operation.

Preferably, the hydraulic cylinder uses water as the hydraulic oil, a hydraulic rod is fixed, and a cylinder body used as the movable part is connected with the pressing and extracting mechanism. So that the cavity is convenient in mounting, and is clean. Water is used as the hydraulic oil, on the one hand, because the system has smaller pressure and can totally use water to substitute the hydraulic oil, and on the other hand, because water is safer and more sanitary.

Preferably, the left side of the blade at the left side of the capsule seat is provided with a sealing cavity matching with the opening of the cavity, and the lower side of the sealing cavity is provided with a coffee outlet, so that hot water can make full extraction without overflow.

Preferably, the water injection holes on the cavity are arranged at the upper side of the blade at the bottom part of the cavity, so that hot water can fully enter into the capsule.

Preferably, the edge of the open side of the cavity is provided with a ring of sealing silica gel which matches with the left edge of the capsule, and therefore hot water and extraction solution are sealed without leakage. Preferably, the hydraulic oil control system is provided with a reversing valve capable of controlling hydraulic water to enter into and come out from the hydraulic cylinder. The system realizes that one one-way hydraulic cylinder can finish pushing of the cavity, so that the system is simple.

Preferably, the reversing valve includes a hydraulic water channel and an extraction water channel. The hydraulic water channel includes a cold water inlet, a cold water outlet and a cold water pressure relief port, wherein the cold water inlet is communicated with a hydraulic water inlet system, and the cold water outlet is communicated with the hydraulic cylinder; the extraction water channel includes a hot water inlet, a hot water outlet and a hot water pressure relief port, the hot water inlet is communicated with a water injection system, and the hot water outlet is communicated with the water injection holes on the cavity. In the original state, the cold water outlet is communicated with the cold water inlet, the hot water inlet is communicated with the hot water pressure relief port, and the cold water inlet is closed. When the pressing and extracting mechanism is in pushing procedure, the cold water outlet is communicated with the cold water inlet, the cold water pressure relief port is closed, and cold water flows in from the cold water inlet and flows out from the cold water outlet. The hot water inlet is communicated with the hot water outlet, the hot water relief port is closed, and hot water flows in from the hot water inlet and flows out from the hot water outlet; when a large gear rotates to the zero state, the cold water inlet is closed, the cold water outlet is communicated with the cold water pressure relief port, and cold water enters into the valve from the cold water outlet, and flows out from the cold water pressure relief port. Where a pinion is positioned the hot water outlet is closed, the hot water inlet is communicated with the hot water pressure relief port, and hot water flows in the valve from the hot water inlet and flows out from the hot water pressure relief port.

Preferably, the reversing valve further includes a cup warming channel which comprises the hot water inlet and a cup warming water outlet. When a cup is cold, the cup can absorb heat of coffee to influence the taste of coffee, and therefore the cup needs heating. During heating of the cup, the hot water outlet is communicated with the hot water pressure relief port, and the cold water inlet is closed and coincides with the zeros state. Where the pinion is positioned the hot water inlet is communicated with the cup warming outlet, the hot water outlet and the hot water pressure relief port are closed, and hot water or steam flows into the valve from the hot water inlet and flows out from the cup warming outlet. Preferably, the hydraulic water channel corresponds to a large gear, the extraction water channel and the cup warming channel correspond to a pinion, both gears are meshed, and each of the cold water inlet, the cold water outlet and the cold water pressure relief port is provided with a movable sealing column which correspondingly contacts with the wedge face of the side of the large gear respectively; each of the hot water inlet, the hot water outlet, the hot water pressure relief port and the cup warming water outlet is provided with a movable column which correspondingly contacts with the wedge face of the pinion respectively, and an elastic sealing sheet is arranged between the sealing column and each of the above ports respectively. When the gears make no motion, a valve body stays in the original state. When the large gear clockwise rotates for 45 degrees, the sealing column seals or opens each port under the action of the wedge face, the cold water outlet is communicated with the cold water inlet, the cold water pressure relief port is closed, and cold water flows in from the cold water inlet and flows out from the cold water outlet. The hot water inlet is communicated with the hot water outlet, the hot water pressure relief port is closed, and hot water flows in from the hot water inlet and flows out from the hot water outlet; when the large gear rotates to the zero state, the cold water inlet is closed, the cold water outlet is communicated with the cold water pressure relief port, and cold water enters into the valve from the cold water outlet and flows out from the cold water pressure relief port. Where the pinion is positioned the hot water outlet is closed, the hot water inlet is communicated with the hot water pressure relief port, and hot water enters into the valve from the hot water inlet and flows out from the hot water pressure relief port. When the large gear counterclockwise rotates for 45 degrees to go into the cup warming procedure, the cold water inlet is closed and coincides with the zero state. Where the pinion is positioned the hot water inlet is communicated with the cup warming outlet, the hot water outlet and the hot water pressure relief port are closed, and hot water or steam flows into the valve from the hot water inlet and flows out from the cup warming outlet.

Preferably, each of the hydraulic rod and a piston of the hydraulic cylinder is provided with a through hole respectively, and the through holes are connected with each other and connected with the hydraulic system.

The invention has the advantages of solving the technical problems that the prior art needs larger manual force, the extraction is incomplete and the like, and realizing a conveniently-operate, completely-extracting, safe and sanitary capsule type coffee machine. After coffee extraction is finished, the capsule can automatically fall off.

So that the invention changes the present situation that the capsule coffee machines basically adopt manual pressing, and realizes an automatic capsule type coffee machine which uses water as the hydraulic oil and utilizes a hydraulic system for pressing.

### Brief description of drawings

Figure 1 is a structural diagram of the invention;
Figure 2 is a structural diagram of the invention;
Figure 3 is a partial structural diagram of the invention;
Figure 4 is a structural diagram of a reversing valve of the invention; and
Figure 5 is a structural diagram of a reversing valve of the invention.

### Detailed description of the invention

The technical scheme of the invention is further elaborated as follows according to embodiments and by combining figures.

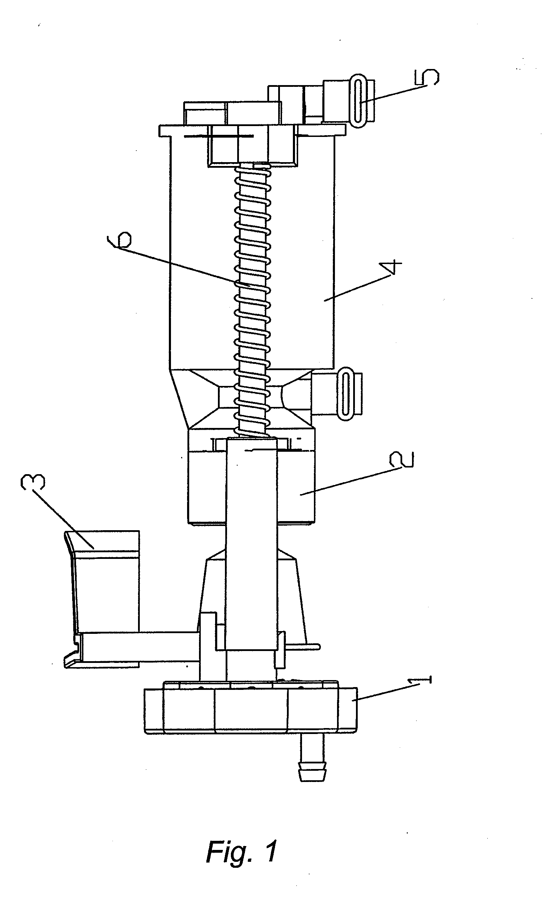

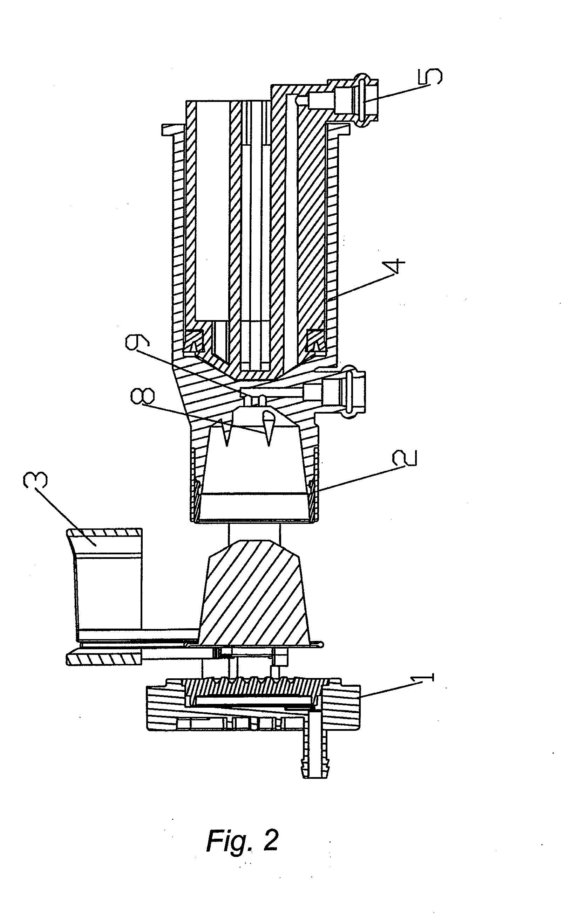

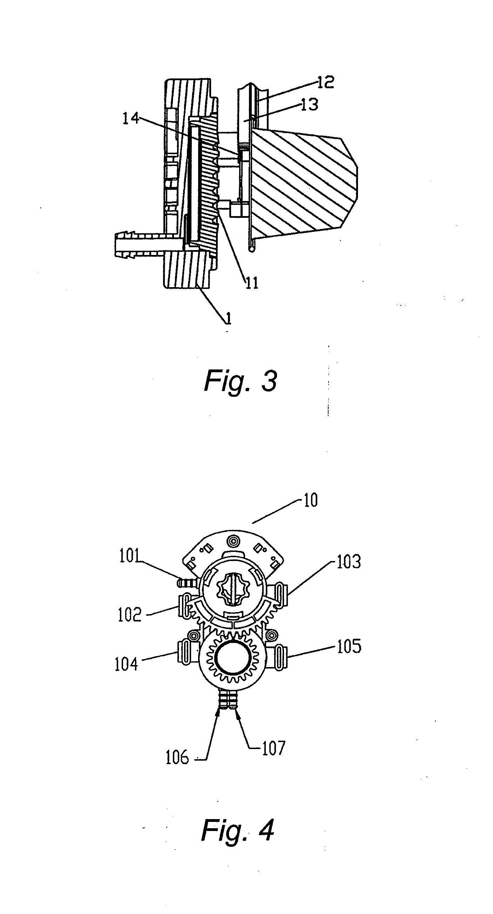

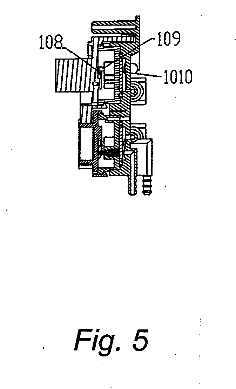

Embodiments: Figure 1 is a structural diagram of the invention; Figure 2 is a structural diagram of the invention; Figure 3 is a partial structural diagram of the invention; Figure 4 is a structural diagram of a reversing valve of the invention; and Figure 5 is a structural diagram of a reversing valve of the invention. There is a capsule seat 3 arranged, and a guide groove 12 at the vertical direction is arranged at two sides of the capsule seat respectively. The guide grooves match with the flange on the left side of a capsule, a rotary lamina 13 is arranged at the flanges on the left sides of the lower parts of both guide grooves respectively, and the free ends of the rotary laminas are toward the inside correspondingly. Torsion return springs 14 are set on the shafts of the rotary laminas. In an original state, the space between the free ends of two rotary laminas is smaller than the diameter of the flange of the capsule, and is greater than or equal to the diameter of the body of the capsule. There is a capsule pressing and extracting mechanism. The pressing and extracting mechanism is set at the right side of the capsule seat, is driven by hydraulic pressure, and has a hydraulic cylinder 4 which uses water as the hydraulic oil and has a fixed hydraulic rod and a cylinder body as the movable part. A guide column is arranged between two sides of the movable part of the hydraulic cylinder and a frame respectively, and is sleeved with a return spring 6 which is connected with both sides of the movable part of the cylinder and the frame respectively. The cylinder body of the hydraulic cylinder is connected with a cavity 2 with an open side, and the open edge of the cavity body is provided with a ring of sealing silica gel which matches with the left edge of the capsule. A through hole is arranged on the hydraulic rod and a piston of the hydraulic cylinder respectively, and the through holes are connected with each other and connected with a hydraulic system. The bottom of the cavity is provided with blades 8, the upper sides of the blades are provided with through holes 9 which are connected with a water injection system, and the left side of the capsule seat is provided with a plurality of needles 11. The left side of the needles on the left side of the capsule seat is provided with a sealing cavity 1 matching with the opening of the cavity, the lower side of the sealing cavity is provided with a coffee outlet, and hydraulic oil is supplied by the hydraulic system which is provided with a reversing valve 10 capable of controlling hydraulic oil to enter into and come out from the hydraulic cylinder. The reversing valve includes a hydraulic water channel, an extraction water channel and a cup warming channel. The hydraulic water channel includes a cold water inlet 103, a cold water outlet 102 and a cold water pressure relief port 101, wherein the cold water inlet is communicated with a hydraulic water inlet system, and the cold water outlet is communicated with a hydraulic cylinder water inlet 5; the extraction water channel includes a hot water inlet 104, a hot water outlet 105 and a hot water pressure relief port 107, the hot water inlet is communicated with a water injection system, and the hot water outlet is communicated with the water injection holes 9 on the cavity; and the cup warming channel includes the hot water inlet and a cup warming water outlet 106. The hydraulic water channel corresponds to a large gear, the extraction water channel and the cup warming channel correspond to a pinion, both gears are meshed, each of the cold water inlet, the cold water outlet and the cold water pressure relief port is provided with a movable sealing column, and the movable sealing columns correspondingly contact with the wedge face of the side of the large gear respectively; each of the hot water inlet, the hot water outlet, the hot water pressure relief port and the cup warming water outlet is provided with a movable sealing column 109, and the movable sealing columns correspondingly contact with the wedge face 108 of the side of the pinion respectively; and an elastic sealing sheet 1010 is arranged between the sealing columns and each of the ports respectively.

During use, a coffee capsule is arranged in the capsule seat, and the flange of the coffee capsule on the left side is arranged in the guide groove and slides down along the guide groove till the flange of the capsule is arranged between the right edge of the guide groove and the rotary lamina at the left side. The driving mechanism drives the cavity to move, the cavity wraps the capsule inside, the blades on the bottom part of the cavity prick the capsule, the cavity drives the capsule to move, and the flange pushes away the rotary lamina to rotate when the capsule is in motion; the rotary laminas return to the initial position under the action of the return force of the spring when the flange penetrates through the rotary laminas, at the time the capsule is pressed by the needles on the left side of the capsule seat, these needles further prick the capsule, the water injection system injects high pressure hot water into the cavity, and hot water enters into the capsule through the holes pricked on the right side of the capsule to perform extraction, and squeezes out liquid with coffee dissolved from the holes pricked on the left side of the capsule to finish extraction. When the pressing and extracting mechanism returns, the capsule can not return as the flange thereof is resisted by the rotary lamina, so that the capsule is separated from the pressing and extracting mechanism. The reversing valve works as follows: when the gears make no motion, the valve body stays in the original state. When the large gear clockwise rotates by 45 degrees, all the ports are sealed or opened by the sealing sheet under the action of the wedge face, the cold water outlet is communicated with the cold water inlet, the cold pressure relief port is closed, and cold water flows in from the cold water inlet and flows out from the cold water outlet. The hot water inlet is communicated with the hot water outlet, the hot water pressure relief port is closed, and hot water flows in from the hot water inlet and flows out from the hot water outlet; when the large gear rotates to the zero state, the cold water inlet is closed, the cold water outlet is communicated with the cold water pressure relief port, and cold water enters the cold water outlet and flows out from the cold pressure relief port. Where the pinion is positioned the hot water outlet is closed, the hot water inlet is communicated with the hot water pressure relief port, and hot water flows into the valve from the hot water inlet and flows out from the hot water pressure relief port. When the large gear rotates counterclockwise by 45 degrees to go into the cup warming procedure, the cold water inlet is closed and coincides with the zero state. Where the pinion is positioned the hot water inlet is communicated with the cup warming outlet, the hot water outlet and the hot water pressure relief port are closed, and hot water or steam flows into the valve and flows out from the cup warming outlet to perform cup warming procedure or perform foaming operation through steam.

So that the invention has the advantages of convenient operation, complete extraction, safety and sanitation, and realizes an automatic capsule type coffee machine which uses water as the hydraulic oil and utilizes the hydraulic system for pressing.

## Claims

1. A novel capsule type coffee machine comprising a frame, a capsule seat, a pressing and extracting mechanism, and a driving mechanism, **characterized in that** a guide groove (12) at the vertical direction is set on either side of the capsule seat (7) respectively, the guide grooves match with the flange on the left side of the capsule, a rotary lamina (13) is set on the edge of the left lower side of every guide groove, the free ends of rotary laminas are toward the inside correspondingly, springs (14) are set on the shafts of the rotary laminas, in an original state, the space between the free ends of two rotary laminas is smaller than the diameter of the flange of the capsule, and is greater than or equal to the diameter of the body of the capsule, the pressing and extracting mechanism set at the right side of the capsule seat has a cavity (2) with an open side, blades (8) are set on the bottom of the cavity, and water injection holes (9) are set on the cavity.

2. The novel capsule type coffee machine according to claim 1, **characterized in that** the driving mechanism is a hydraulic system which comprises a hydraulic oil cylinder and a hydraulic oil control device, and a movable part of the hydraulic oil cylinder (4) is connected with the cavity with an open side.

3. The novel capsule type coffee machine according to claim 2, **characterized in that** a guide column is arranged between two sides of the movable part of the hydraulic cylinder and the frame respectively, and a return spring (6) which is respectively connected with both sides of the movable part of the cylinder and the frame is sleeved on the guide columns respectively.

4. The novel capsule type coffee machine according to claim 3, **characterized in that** the hydraulic cylinder uses water as the hydraulic oil, a hydraulic rod is fixed, and a cylinder body used as the movable part is connected with the pressing and extracting mechanism.

5. The novel capsule type coffee machine according to claim 1, **characterized in that** the left side of the capsule seat is provided with a sealing cavity (1) matching with the opening of the cavity, and the lower side of the sealing cavity is provided with a coffee outlet.

6. The novel capsule type coffee machine according to any preceding claim, **characterized in that** the water injection holes on the cavity are arranged on the upper side of the blade at the bottom part of the cavity.

7. The novel capsule type coffee machine according to claim 5, **characterized in that** the through holes on the cavity hole are arranged on the upper side of the bottom part of the cavity.

8. The novel capsule type coffee machine according to claim 1, or claim 2, or claim 3, or claim 4 or claim 5, **characterized in that** the open edge of the cavity is provided with a ring of sealing silica gel which matches with
the left edge of a capsule.

9. The novel capsule type coffee machine according to claim 3, **characterized in that** the hydraulic oil control system is provided with a reversing valve (10) capable of controlling hydraulic water to enter into or come out from the hydraulic cylinder.

10. The novel capsule type coffee machine according to claim 9, **characterized in that** the reversing valve comprises a hydraulic water channel and an extraction water channel; the hydraulic water channel comprises a cold water inlet (103), a cold water outlet (102) and a cold water pressure relief port (101), and the cold water inlet is communicated with a hydraulic water inlet system, and the cold water outlet is communicated with the hydraulic cylinder; the extraction water channel comprises a hot water inlet (104), a hot water outlet (105) and a hot water pressure relief port (107), the hot water inlet is communicated with a water injection system, and the hot water outlet is communicated with the water injection holes on the cavity.

11. The novel capsule type coffee machine according to claim 10, **characterized in that** the reversing valve further comprises a cup warming channel which comprises the hot water inlet and a cup warming water outlet (106).

12. The novel capsule type coffee machine according to claim 9 or claim 10, **characterized in that** the hydraulic water channel corresponds to a large gear, the extraction water channel and the cup warming channel correspond to a pinion, both gears are meshed, each of the cold water inlet, the cold water outlet and the cold water pressure relief port is provided with a sealing column (109), and the movable sealing columns correspondingly contact with the wedge face (108) of the side of the large gear; each of the hot water inlet, the hot water outlet, the hot water pressure relief port and the cup warming water outlet is provided with a movable sealing column, and the movable sealing columns correspondingly contact with the wedge face of the pinion; and an elastic sealing sheet (1010) is arranged between the sealing columns and each of the ports respectively.

13. The novel capsule type coffee machine according to claim 4 or claim 9, **characterized in that** the hydraulic rod and a piston of the hydraulic cylinder are provided with a through hole, and the through holes are connected with each other and connected with the hydraulic system.
